# EUROPEAN PATENT APPLICATION

(11) **EP 1 873 774 A1**
(43) Date of publication of application: **02.01.2008**
(21) Application number: 06731017.7
(22) Date of filing: 03.04.2006
(51) Int. Cl.: G11B 20/12, G11B 7/0045, G11B 7/007, G11B 20/10

(54) **INFORMATION RECORDING DEVICE AND METHOD, COMPUTER PROGRAM FOR RECORD CONTROL, AND INFORMATION RECORDING MEDIUM**

(30) Priority: 04.04.2005 JP 2005107230
(71) Applicant: Pioneer Corporation, Tokyo 153-8654 (JP)
(72) Inventor: NAMIKI, Tsuyoshi c/o Pioneer Corporation, Tokorozawa-shi, Saitama; 3598522 (JP); YOSHIDA, Masayoshi c/o Pioneer Corporation, Tokorozawa-shi, Saitama; 3598522 (JP); HASEBE, Tsuyoshi c/o Pioneer Corporation, Tokorozawa-shi, Saitama; 3598522 (JP); SUZUKI, Shinji c/o Pioneer Corporation, Tokorozawa-shi, Saitama; 3598522 (JP)
(74) Representative: Viering, Jentschura & Partner
(86) International application number: PCT/JP2006/307069
(87) International publication number: WO 2006/107033

(57) **Abstract**

An information recording device (300) is provided with (i) a recording means (301 or the like) for recording first information in a first recording layer (L0 layer) and for recording second information in a second recording layer (L1 layer) by a laser beam transmitted through the first recording layer, and (ii) a control means (305 or the like) for controlling the recording means to record dummy data as the second information, in a recording area of the second recording layer other than an area facing one recording area of the first recording layer, at the time of recording the first information in the one recording area.

## Description

### Technical Field

The present invention relates to an information recording apparatus and method, such as a DVD recorder, for recording information onto a multilayer type information recording medium, such as a dual-layer type DVD and CD (Compact Disc), a computer program for recording control, and an information recording medium.

### Background Art

In an information recording medium, such as a CD-ROM (Compact Disc - Read Only Memory), a CD-R (Compact Disc - Recordable), a DVD-ROM, a DVD-R, a DVD-RW, and a DVD+R, for example, as described in patent documents 1 and 2 or the like, there is also developed an information recording medium, such as a multilayer type or dual layer type optical disc, in which a plurality of recording layers are laminated or pasted on the same substrate. Then, on an information recording apparatus, such as a DVD recorder, for performing the recording with respect to the dual layer type, i.e., two-layer type, optical disc, laser light for recording is focused or condensed on a recording layer located on the front (i.e. on the closer side to an optical pickup) as viewed from the irradiation side of the laser light (hereinafter referred to as an "L0 layer", as occasion demands) to thereby record information into the L0 layer in an irreversible change recording method by heat or a rewritable method. Moreover, the laser light is focused or condensed on a recording layer located on the rear of the L0 layer (i.e. on the farther side from the optical pickup) as viewed from the irradiation side of the laser light (hereinafter referred to as an "L1 layer", as occasion demands), through the L0 layer or the like, to thereby record information into the L1 layer.

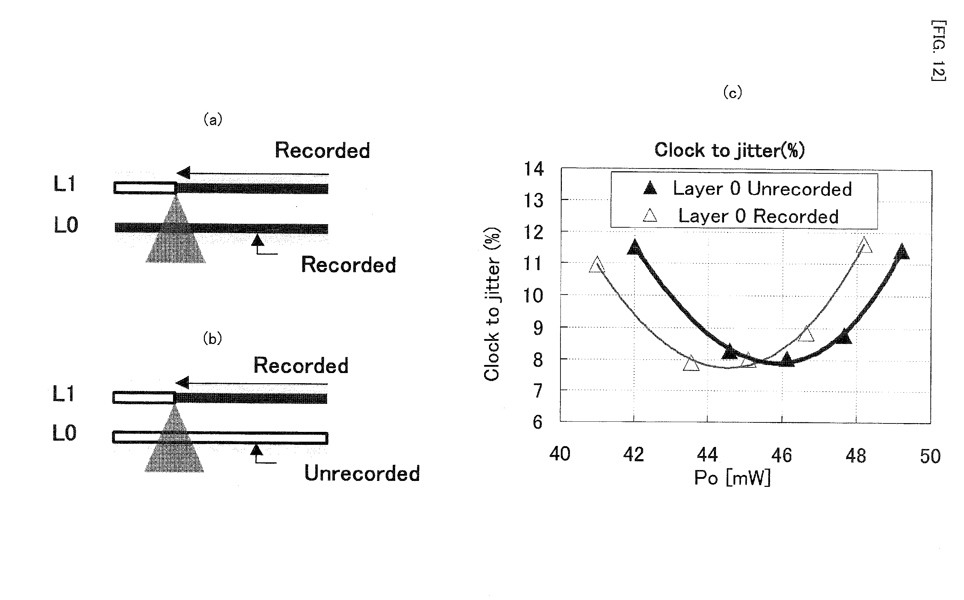

When information is recorded into the L1 layer, which constitutes such a two-layer type optical disc, the optimum recording power of the laser light with which the L1 layer is irradiated through the recorded L0 layer, as shown in FIG. 12(a), is 44.5 (mW: milliwatt) at which a jitter value is minimal on a parabolic curve in a thin line (with white triangles) in FIG. 12(c), for example. On the other hand, the optimum recording power of the laser light with which the L1 layer is irradiated through the unrecorded L0 layer which has a different light transmittance from that of the recorded L0 layer, as shown in FIG. 12(b), is 46 (mW: milliwatt) at which a jitter value is minimal on a parabolic curve in a thick line (with black triangles) in FIG. 12(c), for example. Thus, there is a need to consider whether or not the L0 layer is recorded, in the case of the recording in the L1 layer. With respect to this, there is devised or invented a recording method in which a so-called recording order is satisfied, which is that the laser light for recording which has penetrated or transmitted the L0 layer in a recorded state is to be irradiated, for example. Specifically, after the L0 layer is in a recorded state, information is recorded into the L1 layer by using laser light which holds an optimum recording power corresponding to the recorded L0 layer. On the other hand, the L0 layer is kept in an unrecorded state, and information is recorded into the L1 layer by using laser light which holds an optimum recording power corresponding to the unrecorded L0 layer. Alternatively, it is judged whether or not an area in the L0 layer facing an area in the L1 layer in which information is scheduled to be recorded is already recorded, on the basis of management information, such as space bit map (SBM), and information is recorded into the L1 layer on the basis of the judgment. Here, the expression "facing or opposed" may mean a positional relationship in which one portion of a recording area in the first recording layer and one portion of a recording area in the second recording layer are opposed to and correspond to each other; namely, they exist at almost the same radial position. Moreover, the expression "facing or opposed" may mean a positional relationship considering an error, such as an eccentricity.

Patent document 1: Japanese Patent Application Laid Open NO. 2000-311346
Patent document 2: Japanese Patent Application Laid Open NO. 2001-23237

### Disclosure of Invention

### Subject to be Solved by the Invention

However, in a finalize process in a recording method which satisfies the aforementioned recording order, the recording area in the L1 layer, which faces the recording area in the recorded state in the L0 layer, is inevitably made in the recorded state in order to realize compatibility with a read-only apparatus. Thus, there is such a technical problem that it takes a considerable time for the finalize process.

Alternatively, in the finalize process in the recording method which satisfies the aforementioned recording order, there arises a need to judge whether or not the recording area in the L1 layer, which faces the recording area in the recorded state in the L0 layer, is in the recorded state, on the basis of the management information, such as SBM. Therefore, there is such a technical problem that it causes a complicated control process in the finalize process, to thereby increase a load in the control process.

In view of the aforementioned conventional problems, it is therefore an object of the present invention to provide an information recording apparatus and method, which allow more efficient information recording, even with respect to an information recording medium which has a plurality of recording layers and which can reduce a recording time length, a computer program which makes a computer function as such an information recording apparatus, and an information recording medium.

### Means for Solving the Subject

### (Information Recording Apparatus)

Hereinafter, the information recording apparatus of the present invention will be discussed.

The above object of the present invention can be achieved by an information recording apparatus for recording information into at least a second recording layer (or L1 layer) by using laser light which passes through a first recording layer (or L0 layer) on an information recording medium at least provided with: the first recording layer (or L0 layer) in which a first track to record therein first information (or effective data) is formed; and the second recording layer (or L1 layer) in which a second track to record therein second information (or effective data) is formed, the second track corresponding to the first track, the information recording apparatus provided with: a recording device for recording the first information into the first recording layer and recording the second information into the second recording layer; and a controlling device for controlling the recording device to record dummy data (which can be used to make the information recording medium to be equivalent to an information recording medium in which a finalize process is performed) as the second information into another recording area in the second recording layer, which is located in a position facing one recording area in the first recording layer if the first information is recorded into the one recording area.

According to the information recording apparatus of the present invention, the first information is recorded into the first recording layer, such as a L0 layer, in which the first track is formed, by the recording device under the control of the controlling device. In substantially the same manner, the second information is recorded into the second recording layer, such as a L1 layer, in which the second track corresponding to the first track is formed. Specifically, in the first recording layer, first pre-format address information may be formed to record the first information. In the second recording layer, second pre-format address information may be formed to record the second information. Incidentally, in order to record the first information or the second information in arbitrary timing and in an arbitrary position, pre-format address information, such as LPP (Land PrePit), may be formed on the first track or the second track. Moreover, a relationship between the first track and the second track may be of an opposite type or parallel type, as described later.

In particular, according to the present invention, if the first information is recorded into one recording area in the first recording layer by the recording device under the control of the controlling device, for example, the dummy data is recorded in predetermined timing as the second information into another recording area in the second recording layer, which is located in the position facing the one recording area. The "dummy data" herein is different from the first information and the second information, and it is formal data (or information), such as "Null" and "zero", which is not effective, namely, which does not have a meaning. In addition, when the dummy data is recorded, the attribute of the recording area may be set to a predetermined attribute, such as a lead-out area and a middle area. In other words, the "dummy data" is record information which can make the another recording area substantially equivalent to the recording area in which the finalize process is performed. Moreover, the "predetermined timing" in the present invention may be the same timing as that of the recording of the first information, or it may be timing before or after the recording of the first information. Moreover, the dummy data may be recorded with it mixed with the effective second information, or the dummy data may be simply recorded.

As a result, according to the present invention, in the another recording area in which the dummy data is recorded as the second information, it is possible to almost or completely eliminate a need to record the dummy data (or dummy information) in the finalize process. Therefore, in the finalize process, it is possible to reduce the size of the recording area in which the dummy data needs to be recorded, or it is possible to almost or completely eliminate the recording area in which the dummy data needs to be recorded.

As a result, a time length required for the finalize process becomes substantially equal to the recording time length to record the effective information, such as content information. Thus, it is possible to considerably reduce the time length required for the finalize process, so that a user can feel more comfortable in the finalize process.

In addition, according to the present invention, in the another recording area in which the dummy data is recorded as the second information, it is possible to almost or completely eliminate the need to record the dummy data (or dummy information) in the finalize process. This can simplify a control process in the finalize process, to thereby inhibit a high load on the control process.

In one aspect of the information recording apparatus of the present invention, the controlling device controls the recording device to record the dummy data such that a range of a radial position of the another recording area is included in a range of a radial position of the one recording area.

According to this aspect, it is possible to record the dummy data into the another recording area in the second recording layer which faces the one recording area in the first recording layer, while satisfying the recording order more appropriately.

In another aspect of the information recording apparatus of the present invention, the controlling device controls the recording device to make the another recording area have a same attribute as that of a lead-out area, when the dummy data is recorded.

According to this aspect, it is possible to make the another recording area substantially equivalent to the recording area in which the finalize process is performed when the dummy data is recorded.

In another aspect of the information recording apparatus of the present invention, the controlling device controls the recording device such that (i) a same attribute as that of a data area is given to the another recording area, and (ii) zero or a predetermined value is recorded into the another recording area as the dummy data.

According to this aspect, it is possible to make the another recording area substantially equivalent to the recording area in which the finalize process is performed when the dummy data is recorded.

In another aspect of the information recording apparatus of the present invention, it is further provided with an obtaining device which can obtain at least position information (e.g. space bit map in the L1 layer) about a position in which the second information is recorded in the second recording layer, the controlling device controlling the recording device to perform a finalize process (in which the dummy data is recorded at least into the recording area in the unrecorded state in the second recording layer) on the basis of the obtained position information.

According to this aspect, it is possible to perform the finalize process, i.e. to record the dummy data at least in the recording area in the unrecorded state, more accurately and quickly, on the basis of the obtained position information, such as space bit map updated every time the first information is recorded, as well as recording the second information.

In another aspect of the information recording apparatus of the present invention, it is further provided with a detecting device which can detect at least address information (e.g. "CFFF1h" to "CFFFFh" in the L1 layer) which indicates a position in which the second information is recorded in the second recording layer, the controlling device controlling the recording device to perform a finalize process (in which the dummy data is recorded at least into the recording area in the unrecorded state in the second recording layer) on the basis of the detected address information.

According to this aspect, it is possible to perform the finalize process, i.e. to record the dummy data at least in the recording area in the unrecorded state, more accurately and quickly, on the basis of the detected address information, such as space "CFFF1h" to "CFFFFh" in the L1 layer, as well as recording the second information.

In another aspect of the information recording apparatus of the present invention, the information recording medium has a management information recording area (or RMA) in which at least position information (or space bit map in the L1 layer) can be recorded, the position information being about a position in which the second information is recorded in the second recording layer, the information recording apparatus is further provided with: a reading device for reading the position information recorded in the management information recording area; a memory device for storing the read position information; and an updating device for updating the stored position information if at least the second information is recorded, and the controlling device controls the recording device (i) to perform a finalize process (in which the dummy data is recorded at least into the recording area in the unrecorded state in the second recording layer) on the basis of the updated position information and (ii) to record the updated position information into the management information recording area.

According to this aspect, it is possible to perform the finalize process, i.e. to record the dummy data at least in the recording area in the unrecorded state, more accurately and quickly, on the basis of the updated position information, by the recording device under the control of the controlling device.

In addition, according to this aspect, the updated newest position information is recorded in the management information recording area by the recording device under the control of the controlling device. Thus, the next recording operation or finalize process can be performed more appropriately on the basis of the newest position information.

In another aspect of the information recording apparatus of the present invention, the controlling device controls the recording device to overwrite the another recording area in the second recording layer with the second information.

According to this aspect, since the second information is recorded into the another recording area in the second recording layer, it is possible to use the recording area more efficiently.

### (Information Recording Method)

Hereinafter, the information recording method of the present invention will be discussed.

The above object of the present invention can be achieved by n information recording method on an information recording apparatus for recording information into at least a second recording layer (or L1 layer) by using laser light which passes through a first recording layer (or L0 layer) on an information recording medium at least provided with: the first recording layer (or L0 layer) in which a first track to record therein first information (or effective data) is formed; and the second recording layer (or L1 layer) in which a second track to record therein second information (or effective data) is formed, the second track corresponding to the first track, the information recording method provided with: a recording process of recording the first information into the first recording layer and recording the second information into the second recording layer; and a controlling process of controlling the recording process to record dummy data (the second information includes the dummy data: which can be used to make the information recording medium to be equivalent to an information recording medium in which a finalize process is performed) as the second information into another recording area in the second recording layer, which is located in a position facing one recording area in the first recording layer if the first information is recorded into the one recording area.

According to the information recording method of the present invention, it is possible to receive the various benefits of the aforementioned information recording apparatus of the present invention.

Incidentally, in response to the various aspects of the information recording apparatus of the present invention described above, the information recording method of the present invention can employ various aspects.

### (Computer Program)

Hereinafter, the computer program of the present invention will be discussed.

The above object of the present invention can be also achieved by computer program of instructions for recording control and for tangibly embodying a program of instructions executable by a computer provided in the aforementioned information recording apparatus of the present invention (including its various aspects, to make the computer function as at least one portion of the recording device and the controlling device.

According to the computer program of the present invention, the aforementioned information recording apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

Incidentally, in response to the various aspects in the aforementioned information recording apparatus of the present invention, the computer program of the present invention can adopt various aspects.

The above object of the present invention can be also achieved by a computer program product in a computer-readable medium for tangibly embodying a program of instructions executable by a computer provided in the aforementioned information recording apparatus of the present invention (including its various aspects), to make the computer function as at least one portion of the recording device and the controlling device.

According to the computer program product of the present invention, the aforementioned information recording apparatus can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned information recording apparatus.

### (Information Recording Medium)

Hereinafter, the information recording medium of the present invention will be discussed.

The above object of the present invention can be also achieved by an information recording medium at least provided with: a first recording layer, in which a first track to record therein first information is formed; and a second recording layer, in which a second track to record therein second information is formed, the second track corresponding to the first track, the second track being formed on the second recording layer such that dummy data (which can be used to make the information recording medium to be equivalent to an information recording medium in which a finalize process is performed) can be recorded as the second information in another recording area in the second recording layer, which is located in a position facing one recording area in the first recording layer in which the first information is recorded.

According to the information recording medium of the present invention, the first information is recorded along the first track, which is formed in the first recording layer and in which address information, such as LPP (Land Pre Pit), and clock information can be read. Simultaneously with or before or after this, the second information is recorded along the second track, which is formed in the second recording layer and in which address information, such as LPP, and clock information can be read. Specifically, the first track may be directed from one side to the other out of the inner and outer circumferential sides of a disc-shaped substrate, which is provided for the information recording medium, and in contrast, the second track may be directed from the other side to the one side. That is, continuous recording can be performed in an "opposite method" in which the recording tracks face in the opposite direction in the two recording layers, on the two-layer type or multilayer type information recording medium. Therefore, if the recording is continuously performed from the end edge of the first recording layer to the start edge of the second recording layer, it is hardly or not necessary to change, in the radial direction, the irradiation position of laser light on the substrate surface, in changing the recording layer targeted for an information recording process or information reproduction process. Thus, it is possible to perform quick layer jump (i.e. a layer change operation). This is extremely useful in practice, in the point that it facilitates uninterrupted reproduction without a special buffer function to change the recording layer, in recording the continuous record information, such as a movie.

Alternatively, the first track may be directed from the one side to the other out of the inner and outer circumferential sides described above, and the second recording track may be also directed from the one side to the other. That is, continuous recording can be performed in a "parallel method" in which the recording tracks face in the same direction in the two recording layers, on the two-layer type or multilayer type information recording medium. In the parallel method, if the recording or reproduction is ended in the first recording layer, the optical pickup, located on the outermost circumference, needs to be displaced again to the innermost circumference when the recording or reproduction is started in the second recording layer. Thus, a changing time from the first recording layer to the second recording layer becomes longer by that much.

In particular, according to the present invention, the second track in which the address information, such as LPP, and the clock information can be read is formed in the second recording layer such that the second information, such as dummy data, can be recorded in the another recording area in the second recording layer which is located in the position facing the one recording area in the first recording layer in which the first information is recorded.

As a result, according to the present invention, in the another recording area in which the dummy data is recorded as the second information, it is possible to almost or completely eliminate the need to record the dummy data (or dummy information) in the finalize process. Therefore, in the finalize process, it is possible to reduce the size of the recording area in which the dummy data needs to be recorded, or it is possible to almost or completely eliminate the recording area in which the dummy data needs to be recorded.

As a result, the time length required for the finalize process becomes substantially equal to the recording time length to record the effective information, such as content information. Thus, it is possible to considerably reduce the time length required for the finalize process, so that a user can further feel more comfortable in the finalize process.

In one aspect of the information recording medium of the present invention, at least one of the first recording layer and the second recording layer has a management information recording area (or RMA) in which at least position information (or space it map in the L1 layer) can be recorded, the position information being about a position in which the second information is recorded in the second recording layer.

According to this aspect, it is possible to perform the finalize process, i.e. to record the dummy data at least in the recording area in the unrecorded state, more accurately and quickly, on the basis of the position information obtained from the management information recording area, by virtue of the aforementioned information recording apparatus.

In another aspect of the information recording medium of the present invention, the first information or the second information is recorded by a predetermined block unit (or ECC block) in the first recording layer and the second recording layer, and the predetermined block holds information which indicates an attribute of a data area, an attribute of a lead-out area, or an attribute of a middle area.

According to this aspect, it is possible to perform the finalize process, i.e. to record the dummy data at least in the recording area in the unrecorded state, more accurately and quickly, on the basis of the information which indicates the attribute of the data area, the attribute of the lead-out area, or the attribute of the middle area and which is held in the predetermined block, by virtue of the aforementioned information recording apparatus.

These effects and other advantages of the present invention will become more apparent from the following embodiments.

As explained above, according to the information recording apparatus of the present invention, it is provided with the recording device and the controlling device. According to the information recording method of the present invention, it is provided with the recording process and the controlling process. Thus, the time length required for the finalize process becomes substantially equal to the recording time length to record the effective information, such as content information. Thus, it is possible to considerably reduce the time length required for the finalize process, so that a user can feel more comfortable. In addition, according to the present invention, in the another recording area in which the dummy data is recorded as the second information, it is possible to almost or completely eliminate the need to record the dummy data (or dummy information) in the finalize process. This can simplify a control process in the finalize process, to thereby inhibit a high load on the control process.

Moreover, according to the computer program of the present invention, it makes a computer function as the aforementioned information recording apparatus of the present invention. Thus, it enables the information recording apparatus to be constructed such that the time length required for the finalize process becomes substantially equal to the recording time length to record the effective information, such as content information. Thus, it is possible to considerably reduce the time length required for the finalize process, so that a user can feel more comfortable.

Moreover, according to the information recording medium of the present invention, it is provided with: the first recording layer in which the first track is formed; and the second recording layer in which the second track is formed. Thus, it enables the information recording apparatus to be constructed such that the time length required for the finalize process becomes substantially equal to the recording time length to record the effective information, such as content information. Thus, it is possible to considerably reduce the time length required for the finalize process, so that a user can feel more comfortable.

### Brief Description of Drawings

[FIG. 1] FIGs. 1 are a substantial plan view showing the basic structure of an optical disc having a plurality of recording areas in an embodiment of an information recording medium of the present invention (FIG. 1(a)), and a schematic conceptual diagram showing a recording area structure in the radial direction corresponding to a cross sectional view of the optical disc (FIG. 1(b)).
[FIG. 2] FIG. 2 is one conceptual graph showing the data structure of a two-layer type optical disc in the embodiment of the information recording medium, a physical sector number which constitutes an ECC block in the recording area of the optical disc, and a recording or reproducing method in an opposite manner of the optical disc.
[FIG. 3] FIG. 3 is a table showing information included in an RMD which constitutes one example of the "management information" of the present invention.
[FIG. 4] FIG. 4 is another conceptual graph showing the data structure of the two-layer type optical disc in the embodiment of the information recording medium, the physical sector number which constitutes the ECC block in the recording area of the optical disc, and the recording or reproducing method in the opposite manner of the optical disc.
[FIG. 5] FIG. 5 is a block diagram showing the basic structure of a host computer and an information recording / reproducing apparatus in an embodiment of the information recording apparatus of the present invention.
[FIG. 6] FIG. 6 is a flowchart showing an overall recording operation and a finalize process, performed by the information recording / reproducing apparatus in the embodiment of the information recording apparatus of the present invention.
[FIG. 7] FIG. 7 is a schematic diagram showing the recording areas in which the recording operation is performed, in a first embodiment of the present invention.
[FIG. 8] FIG. 8 is a conceptual schematic diagram schematically showing a route when the information recording / reproducing apparatus, such as a general DVD-ROM drive, accesses a desired address on the two-layer type optical disc.
[FIG. 9] FIG. 9 is a schematic diagram schematically showing the recording areas in which the recording operation is performed, in a comparison example.
[FIG. 10] FIG. 10 is a schematic diagram showing the recording areas in which the recording operation is performed, with an effect related to the first embodiment of the present invention focused.
[FIG. 11] FIG. 11 is a flowchart showing an overall recording operation and a finalize process, performed by an information recording / reproducing apparatus in a second embodiment of the information recording apparatus of the present invention.
[FIG. 12] FIGs. 12 are schematic diagrams conceptually showing a recording order in the present invention (FIG. 12(a) and FIG. 12(b)) and a graph numerically showing the recording order (FIG. 12(c)).

### Description of Reference Codes

100...optical disc, 101-0 (101-1)...lead-in area, 102-0 (102-1)...data area, 103-0 (103a-1, 103-1)...lead-out area, 104-0 (104a-0, 104-1)...middle area, 104s-0 (104s-1)...shift middle area, 105-0 (105-1)...PCA, 106-0 (106-1)...RMA, 300... information recording / reproducing apparatus, 301... optical pickup, 302...signal recording / reproducing device, 305...CPU (drive control device), 306... spindle motor, 307 (402) ... memory, 308 (406) ... data input / output control device, 309 (407)...bus, 400...host computer, 401...CPU (for host), 403 ...operation control device, 404...operation button, 405...display panel, LB... laser light

### Best Mode for Carrying Out the Invention

Hereinafter, the best mode for carrying out the present invention will be discussed in order for each embodiment, with reference to the drawings.

### (1) Embodiment of Information Recording Medium

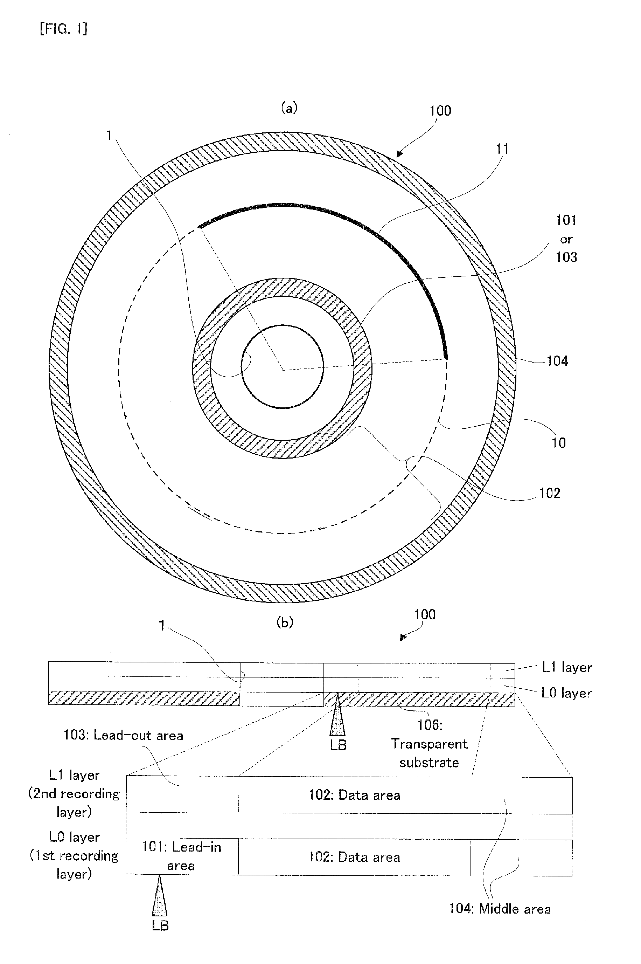

Firstly, with reference to FIGs. 1 to FIG. 4, an embodiment of the information recording medium of the present invention will be discussed in detail. Incidentally, in the optical disc in the embodiment, an opposite method is adopted, as one specific example of a recording method, in which the track pass of the L0 layer, which constitutes one example of the "first recording track" of the present invention, and the track pass of the L1 layer, which constitutes one example of the "second recording track" of the present invention, have opposite recording directions.

### (1-1) Basic Structure

At first, with reference to FIG. 1(a) and FIG. 1(b), the basic structure of an optical disc in the embodiment of the recording medium of the present invention will be discussed. FIG. 1(a) is a substantial plan view showing the basic structure of an optical disc having a plurality of recording areas in the embodiment of the information recording medium of the present invention, and FIG. 1(b) is a schematic conceptual diagram showing a recording area structure in the radial direction corresponding to a cross sectional view of the optical disc.

As shown in FIG. 1(a) and FIG. 1(b), an optical disc 100 has a recording surface on a disc main body with a diameter of about 12 cm, as is a DVD. On the recording surface, the optical disc 100 is provided with: a lead-in area 101 or a lead-out area 103; a data area 102; and a middle area 104, which are associated with the embodiment, with a center hole 1 as the center. Then, for example, on a transparent substrate 106 of the optical disc 100, there are laminated recording layers, such as an L0 layer and an L1 layer. In each recording area of the recording layers, tracks 10, such as groove tracks and land tracks, are alternately placed, spirally or concentrically, with the center hole 1 as the center. On the track 10, data is divided and recorded by a unit of ECC block 11. The ECC block 11 is a data management unit by which record information is error-correctable.

Incidentally, the present invention is not particularly limited to the optical disc having these three areas. For example, even if the lead-in area 101, the lead-out area 103 or the middle area 104 does not exist, a data structure explained below can be constructed. Moreover, as described later, the lead-in area 101, the lead-out area 103 or the middle area 104 may be further segmentized.

The optical disc 100 in the embodiment, as shown in FIG. 1(b), has such a structure that the L0 layer and the L1 layer, which constitute one example of the "first and second record layers" of the present invention as descried later, respectively, are laminated on the transparent substrate 106. Upon the recording / reproduction of such a two-layer type optical disc 100, the recording / reproduction in the L0 layer or the L1 layer is performed, depending on which recording layer has the focus position of laser light LB, irradiated from the lower to upper side in FIG. 1(b). Moreover, the optical disc 100 in the embodiment is not limited to a two-layer single sided type, i.e., a dual layer type, but may be a two-layer double sided type, i.e., a dual layer double sided type. Furthermore, the optical disc 100 in the embodiment is not limited to the optical disc having the two recording layers, as described above, but may be an optical disc of a multilayer type which has three or more layers. Incidentally, a recording or reproduction procedure by the opposite method on the two-layer type optical disc and a data structure in each layer will be described later.

### (1-2) Detailed Structure

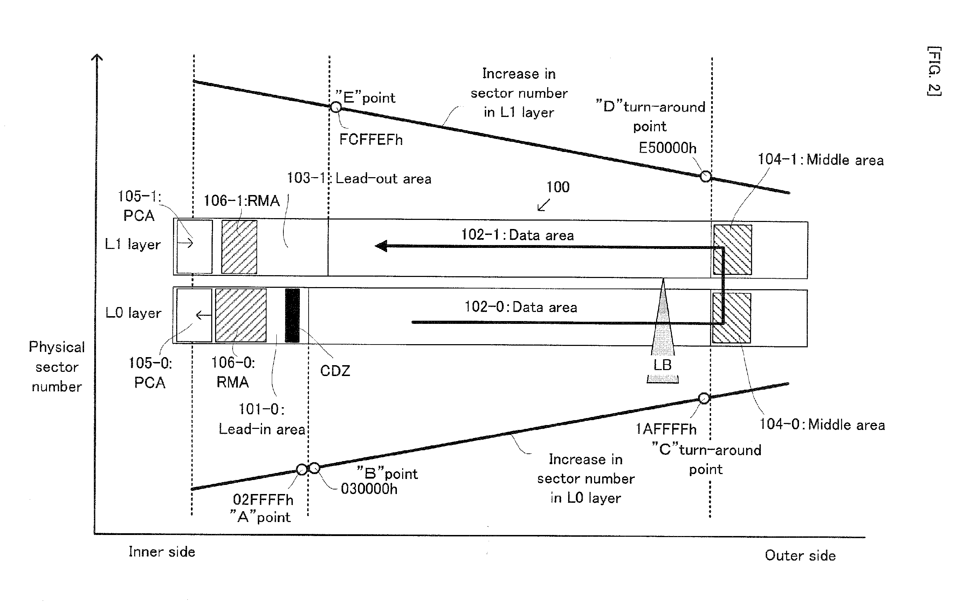

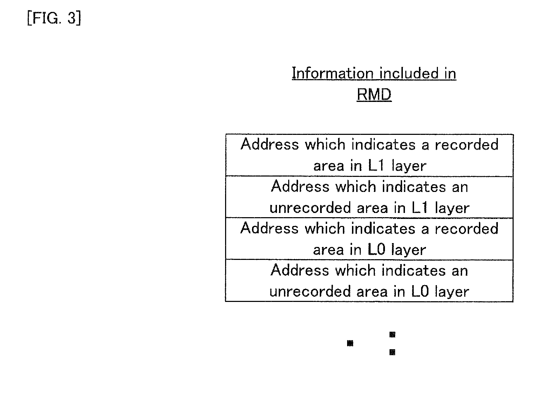

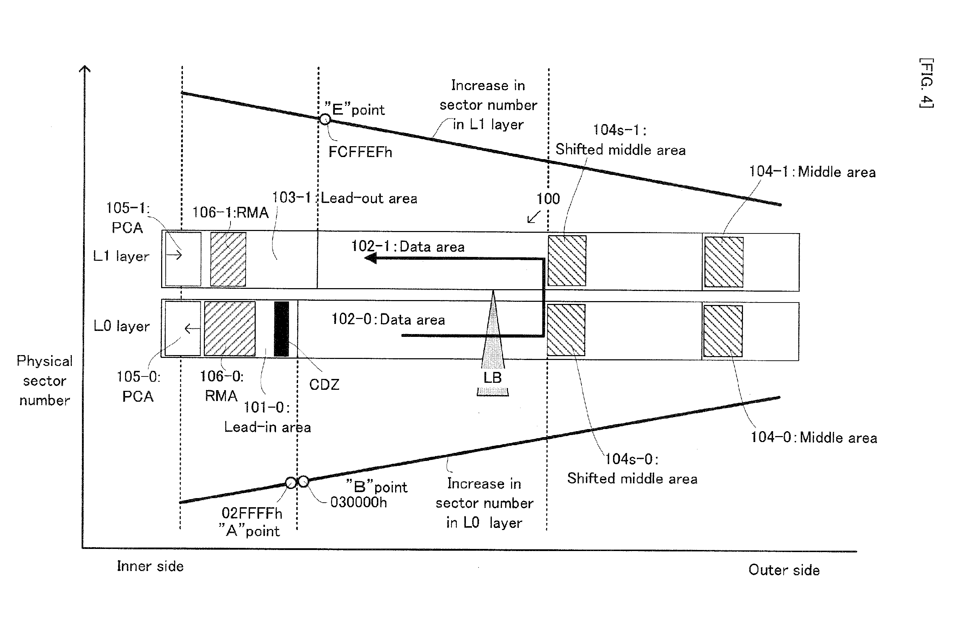

Next, with reference to FIG. 2 to FIG. 4, the detailed structure of the two-layer type optical disc in the embodiment of the information recording medium of the present invention will be discussed. More specifically, with reference to FIG. 2 to FIG. 4, the data structure of the two-layer type optical disc, a physical sector number (hereinafter referred to as a "sector number", as occasion demands) which constitutes an ECC block in the recording area of the optical disc, and a recording or reproducing procedure in the opposite manner of the optical disc will be discussed. FIG. 2 is one conceptual graph showing the data structure of the two-layer type optical disc in the embodiment of the information recording medium, the physical sector number which constitutes the ECC block in the recording area of the optical disc, and the recording or reproducing method in an opposite manner of the optical disc. FIG. 3 is a table showing information included in an RMD which constitutes one example of the "management information" of the present invention. FIG. 4 is another conceptual graph showing the data structure of the two-layer type optical disc in the embodiment of the information recording medium, the physical sector number which constitutes the ECC block in the recording area of the optical disc, and the recording or reproducing method in the opposite manner of the optical disc. Incidentally, the vertical axis in FIG. 2 and FIG. 4 indicates the sector number expressed by hexadecimal numeral, and the horizontal axis indicates a relative position in the radial direction of the optical disc.

As shown in FIG. 2, the two-layer type optical disc 100 in the embodiment of the information recording medium of the present invention is provided with two recording layers laminated on a not-illustrated substrate, i.e. the L0 layer and the L1 layer. Specifically, the L0 layer is provided, from the inner to the outer circumferential side, with: a power calibration area 105-0 (hereinafter referred to as a "PCA", as occasion demands) for the detection of an optimum recording power (calibration process: OPC: Optimum Power Control); a recording management area 106-0 (hereinafter referred to as an RMA, as occasion demands); a lead-in area 101-0; a data area102-0; and a middle area 104-0. Moreover, an arrow in the PCA 105-0 shows directions of consuming the recording area for the calibration process.

In the RMA 106-0 (and 106-1 described later), it is possible to record RMD (Recording Management Data) which constitutes one example of the "management information" of the present invention. Specifically, in the RMA 106-0 (106-1), the RMD can be additionally recorded or written once, about 700 times. The RMA 106-0 (106-1) constitutes one example of the "management information recording area" of the present invention.

As shown in FIG. 3, the RMD may hold fields to record therein the following several types of various information. That is, the RMD may hold the fields to record therein (i) address information which indicates a recording area in a recorded state in the L1 layer, (ii) address information which indicates a recording area in an unrecorded state in the L1 layer, (iii) address information which indicates a recording area in the recorded state in the L0 layer, and (iv) address information which indicates a recording area in the unrecorded state in the L0 layer, as the "management information" of the present invention.

In addition, the RMD may hold the fields to record therein (v) identification number information about an information recording / reproducing apparatus which performs a recording operation with respect to the optical disc 100, so-called drive ID information (drive identification information), (vi) numerical information about an optimum recording power detected as a result of the calibration process by the information recording / reproducing apparatus designated by the drive ID, (vii) disc state information which indicates the unrecorded state, a state in which a finalize process which does not allow write-once or additional recording is already performed, or a state in which a recording method, such as an incremental recording method, is already performed, and the like.

The lead-in area 101-0 is provided with a control data zone CDZ. In the control data zone CDZ, various information, such as the number of recording layers, the direction of the recording track, and a track pitch, is pre-recorded with laser light or the like, for example. Moreover, in the data area 102-0, the record information can be recorded. Furthermore, the middle area 104-0 has a basic function to prevent a recording or reproduction position with respect to the L0 layer and the L1 layer from deviating to an unrecorded area and the outside of the substrate. It also has a function as a so-called" jump buffer area", which is to prevent, in layer jump, the recording or production position from deviating to the unrecorded area and the outside of the substrate.

On the other hand, the L1 layer is provided, from the outer to the inner circumferential side, with: the middle area 104-1; a data area 102-1; a lead-out area 103-1; the RMA 106-1; and a PCA 105-1. More specifically, the PCA 105-0 (105-1) and the RMA 106-0 (106-1) may be collectively referred to as an "Information Area". Moreover, the above-mentioned lead-in area 101-0 (101-1), the data area 102-0 (102-1), and the middle area 104-0 (104-1) may be collectively called as an "R-Information Area".

In particular, in the embodiment, for example, the second track may be formed in the L1 layer such that information, such as dummy data, can be recorded into a recording area in the L1 layer facing one recording area in the L0 layer in which information is recorded.

Moreover, in the optical disc 100 in the embodiment, the outer circumferential end of the data area 102-0 (102-1) may be located on the inner circumferential side if the data amount of the record information is relatively smaller than the entire recording capacity of the optical disc, in the incremental recording method or the like, for example, as shown in FIG. 4. In this case, in a direction to the outer circumferential side from the outer circumferential end of the data area 102-0 (102-1), there may be provided a shifted middle area 104s-0 (104s-1).

The two-layer type optical disc 100 is constructed in the above manner, so that in the recording or reproduction of the optical disc 100, the laser light LB is irradiated from the side of a not-illustrated substrate, i.e., from the lower to the upper side in FIG. 2 and FIG. 4, by the optical pickup or the like of an information recording / reproducing apparatus in one specific example of the information recording apparatus of the present invention described later, and the focal distance thereof or the like is controlled. At the same time, the travel distance and direction in the radial direction of the optical disc 100 are controlled. By this, the data is recorded into each recording layer, or the recorded data is reproduced.

As the recording or reproduction procedure of the two-layer type optical disc in the embodiment of the information recording medium of the present invention, the opposite method is employed. The opposite method herein is such a method that the optical pickup of the information recording / reproducing apparatus described later is displaced from the inner to the outer circumferential side, i.e. in a direction of a right-pointing arrow in FIG. 2 and FIG. 4, in the L0 layer as the recording or reproducing procedure of the two-layer type optical disc, while the optical pickup is displaced from the outer to the inner circumferential side, i.e. in a direction of a left-pointing arrow in FIG. 2 and FIG. 4, in the L1 layer, to thereby perform the recording or reproduction on the two-layer type optical disc. In the opposite method, if the recording or reproduction is ended in the L0 layer, the optical pickup, located on the outermost circumference, does not need to be displaced again to the innermost circumference when the recording or reproduction is started in the L1 layer, and it is enough if only the focal distance from the L0 layer to the L1 layer is changed. Thus, there is an advantage that a changing time from the L0 layer to the L1 layer is shorter than that in the parallel manner. This is why the opposite method is employed in the recording of large volumes of content information.

Specifically, as shown in the graph part of FIG. 2, firstly, in the L0 layer, as the optical pickup is displaced in the lead-in area 101-0, the data area 102-0, and the middle area 104-0, from the inner to the outer circumferential side, the sector number in the recording area of the optical disc 100 increases. More specifically, the optical pickup sequentially accesses the end position of the lead-in area 101-0 with a sector number of "02FFFFh" (refer to an A point in FIG. 2), the start position of the data area 102-0 with a sector number of "030000h" (refer to a B point in FIG. 2), and the end position of the data area 102-0 with a sector number of "1AFFFFh" (hereinafter referred to as a "turn-around point" in the L0 layer, as occasion demands: refer to a C point in FIG. 2), and the optical pickup is displaced to the middle area 104-0 which functions as the buffer, by which the recording or reproduction is performed in the L0 layer. Incidentally, in the embodiment, "h" which is the end of "30000h" or the like indicates that it is expressed by hexadecimal numeral. On the other hand, in the L1 layer, specifically, as the optical pickup is displaced in the middle area 104-1, the data area 102-1, and the lead-out area 103-1 from the outer to the inner circumferential side, the sector number in the recording area of the optical disc 100 increases. More specifically, the optical pickup sequentially accesses the middle area 104-1 which functions as the buffer, the start position of the data area 102-1 with a sector number of "E50000h" (hereinafter referred to as a "turn-around point" in the L1 layer, as occasion demands: refer to a D point in FIG. 2), and the end position of the data area 102-1 with a sector number of "FCFFEFh" (refer to an E point in FIG. 2), and the optical pickup is displaced to the lead-out area 103-1, by which the recording or reproduction is performed in the L1 layer.

All the sector numbers in the L0 layer and the L1 layer explained above have a 15's complement number relationship in the hexadecimal numeral. More specifically, the turn-around point in the L0 layer (the sector number of "1AFFFFh") and the turn-around point in the L1 layer (the sector number of "E50000h") have the 15's complement number relationship. As a formal matter, the complement number of the "1AFFFFh" is obtained by converting the sector number of "1AFFFFh" in the hexadecimal numeral to a binary number of "000110101111111111111111", inverting the bits to "111001010000000000000000", and reconverting it to the "E50000h" in the hexadecimal numeral.

Thus, the record information, such as contents, is recorded or reproduced at the same time that the optical pickup is continuously displaced, in the sector numbers of "030000h" to "1AFFFFh" of the data area 102-0 in the L0 layer and the sector numbers of "E50000h" to "FCFFEFh" of the data area 102-1 in the L1 layer, for example.

With respect to the physical sector number explained above, a Logical Block Address (LBA) is assigned or allocated, one to one. More specifically, for example, a "000000" LBA corresponds to the sector number of "030000h", and a "17FFFF" LBA corresponds to the sector number of "1AFFFFh". Moreover, a "180000" LBA corresponds to the sector number of "E50000h", and a "2FFFEF" LBA corresponds to the sector number of "FCFFEFh". Thus, for example, a host computer can perform the recording and reproduction operations in accordance with the logical block address managed by a file system, for example, without aware of the physical sector number.

### (2) First Embodiment of Information Recording Apparatus

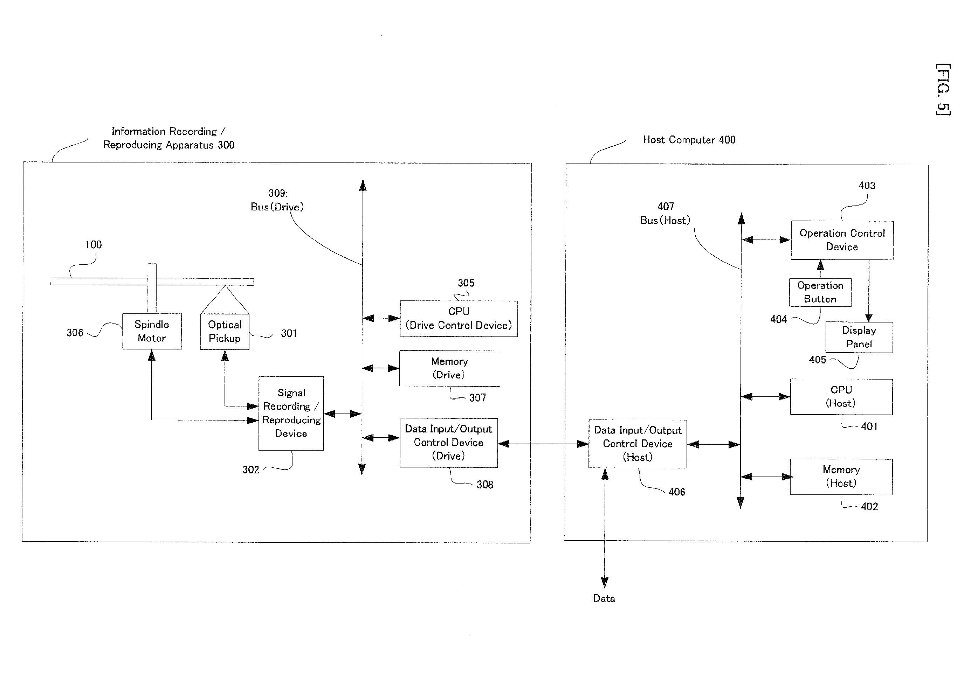

Next, with reference to FIG. 5 to FIG. 8, the first embodiment of the information recording apparatus of the present invention will be discussed in detail. In particular, the first embodiment is an example in which the information recording apparatus of the present invention is applied to an information recording / reproducing apparatus for the optical disc.

### (2-1) Basic Structure

Firstly, with reference to FIG. 5, the basic structure of an information / reproducing apparatus 300 in the first embodiment of the information recording apparatus of the present invention, and a host computer 400 will be discussed. FIG. 5 is a block diagram showing the basic structure of the host computer and the information recording / reproducing apparatus in the embodiment of the information recording apparatus of the present invention. Incidentally, the information recording / reproducing apparatus 300 has a function of recording the record data onto the optical disc 100 and a function of reproducing the record data recorded on the optical disc 100.

With reference to FIG. 5, the inner structure of information recording / reproducing apparatus 300 will be discussed. The information recording / reproducing apparatus 300 is an apparatus for recording the information onto the optical disc 100 and reading the information recorded on the optical disc 100, under the control of a CPU (Central Processing Unit) 305 for the drive.

The information recording / reproducing apparatus 300 is provided with: the optical disc 100; an optical pickup 301; a signal recording / reproducing device 302; an address detection device 303; an address operation device 304; the CPU (drive control device) 305; a spindle motor 306; a memory 307; a data input / output control device 308; and a bus 309.

The host computer 400 is provided with: a CPU (host control device) 401; a memory 402; an operation control device 403; an operation button 404; a display panel 405; a data input / output control device 406; and a bus 407.

In particular, the information recording / reproducing apparatus 300 may be constructed to communicate with an external network by containing the host computer having a communication device, such as a modem, in the same housing. Alternatively, the CPU (host control device) 401 of the host computer 400 having a communication device, such as an i-link, may directly control the information recording / reproducing apparatus 300 through the data input / output control device 308 and the bus 309, to thereby communicate with the external network.

The optical pickup 301 is to perform the recording / reproduction with respect to the optical disc 100, and is provided with a semiconductor laser device, a lens, and the like. More specifically, the optical pickup 301 irradiates the optical disc 100 with a light beam, such as a laser beam, as reading light with a first power upon reproduction, and as writing light with a second power upon recording, with it modulated.

The signal recording / reproducing device 302 controls the optical pickup 301 and the spindle motor 306, to thereby perform the recording / reproduction with respect to the optical disc 100. More specifically, the signal recording / reproducing device 302 is provided with: a laser diode (LD) driver; a head amplifier; and the like, for example. The laser diode driver (LD driver) drives a not-illustrated semiconductor laser device located in the optical pickup 301. The head amplifier amplifies the output signal of the optical pickup 301, i.e. the reflective light of a light beam, and outputs the amplified signal. More specifically, the signal recording / reproducing device 302 drives the not-illustrated semiconductor laser device located in the optical pickup 301, in order to determine an optimum laser power by the recording and reproduction processes for an OPC (Optimum Power Control) pattern, together with a not-illustrated timing generator or the like, under the CPU 305, upon an OPC process. In particular, the signal recording / reproducing device 302 constitutes one example of the "recording device", together with the optical pickup 301.

The CPU (drive control device) 305 controls the entire information recording / reproducing apparatus 300 by giving an instruction to various controlling devices, through the bus 357. Moreover, software or firmware for operating the CPU 305 is stored in the memory 307. In particular, the CPU 305 is one specific example of the "controlling device" of the present invention.

The spindle motor 306 is intended to rotate and stop the optical disc 100, and operates upon accessing the optical disc. More specifically, the spindle motor 306 is constructed to rotate and stop the optical disc 100 at a predetermined speed, under spindle servo from a not-illustrated servo unit or the like.

The memory 307 is used in the whole data processing and the OPC process or the like on the information recording / reproducing apparatus 300, including a buffer area for the record / reproduction data, an area used as an intermediate buffer when data is converted into the data that can be used on the signal recording / reproducing device 302, and the like. Moreover, the memory 307 is provided with: a ROM area into which a program for performing an operation as a recording device, i.e. firmware, is stored; a buffer for temporary storage of the record / reproduction data; a RAM area into which a parameter required for the operation of a firmware program or the like is stored; and the like.

The data input / output control device 308 controls the input / output of the data from the exterior with respect to the information recording / reproducing apparatus 300, to thereby perform storage to and export from the data buffer on the memory 307. A drive control command issued from the external host computer 400 (hereinafter referred to as a "host", as occasion demands) connected to the information recording / reproducing apparatus 300 through an interface, such as a SCSI and an ATAPI, is transmitted to the CPU 305 through the data input / output control device 308. Moreover, the record / reproduction data is also transmitted and received with respect to the host computer 400 through the data input / output control device 308, in the same manner.

The CPU (host control device) 401, the memory 402, the data input / output control device 406, and the bus 407 in the host computer 400 are substantially the same as the corresponding constitutional elements in the information recording / reproducing apparatus 300.

In particular, the operation control device 403 receives an operation instruction and performs display with respect to the host computer 400, and transmits an instruction by the operation button 404, such as an instruction to record or reproduce, to the CPU 401. The CPU 401 may transmit a control command to the information recording / reproducing apparatus 300, through the data input / output control device 406, on the basis of instruction information from the operation control device 403, to thereby control the entire information recording / reproducing apparatus 300. In the same manner, the CPU 401 can transmit a command for requesting the information recording / reproducing apparatus 300 to transmit an operational state to the host, with respect to the information recording / reproducing apparatus 300. By this, the operational state of the information recording / reproducing apparatus 300, such as during recording and during reproduction, can e recognized, so that the CPU 401 can output the operational state of the information recording / reproducing apparatus 300 to the display panel 405, such as a fluorescent tube and an LCD, through the operation control device 403.

One specific example used by combining the information recording / reproducing apparatus 300 and the host computer 400, as explained above, is household equipment, such as recorder equipment for recording and reproducing video images. The recorder equipment records a video signal from a broadcast reception tuner and an external connection terminal, onto a disc, and outputs the video signal reproduced from the disc to external display equipment, such as a television. The operation as the recorder equipment is performed by executing a program stored in the memory 402, on the CPU 401. Moreover, in another specific example, the information recording / reproducing apparatus 300 is a disc drive (hereinafter referred to as a "drive", as occasion demands), and the host computer 400 is a personal computer and a work station. The host computer, such as the personal computer, and the drive are connected through the data input / output control device 308 (406), such as the SCSI and the ATAPI, and application, such as writing software, installed in the host computer controls the disc drive.

### (2-2) Overall Operation Principle

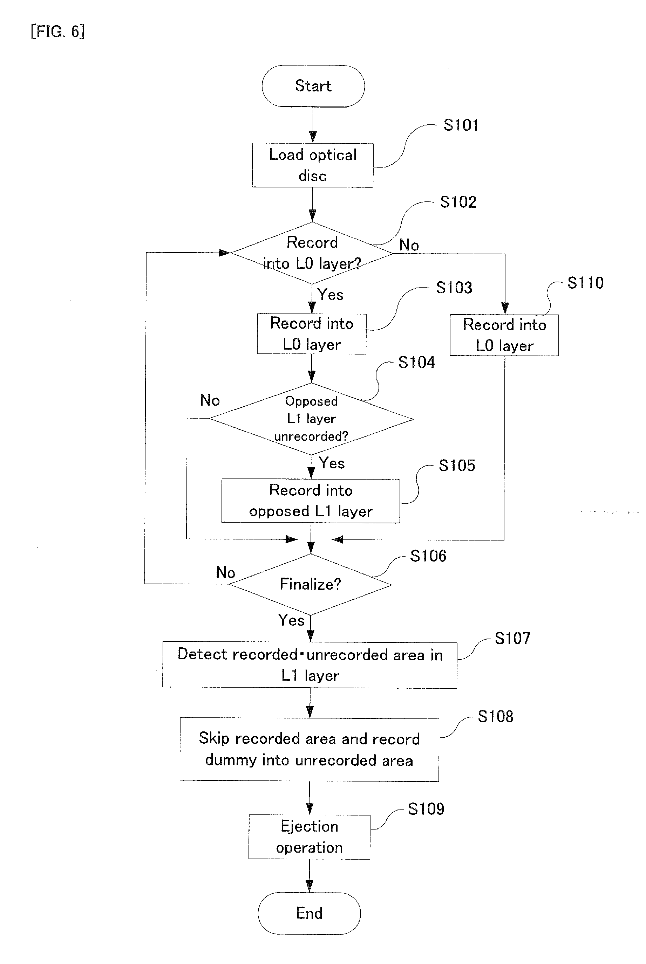

Next, with reference to FIG. 5 described above, if necessary, in addition to FIG. 6, the overall operation principle of the information recording / reproducing apparatus in the first embodiment of the information recording apparatus of the present invention will be discussed. FIG. 6 is a flowchart showing the overall recording operation and the finalize process, performed by the information recording / reproducing apparatus in the embodiment of the information recording apparatus of the present invention.

As shown in FIG. 6, if the optical disc 100 is loaded, the management information, such as the RMD, is obtained as an initial operation, by a reading device, such as the optical pickup 301 and the signal recording / reproducing device 302, under the control of the controlling device, such as the CPU 305 (step S101).

Then, under the control of the controlling device, it is judged whether or not information is recorded into the L0 layer of the optical disc 100 (step S102). If information is recorded into the L0 layer of the optical disc 100 (the step S102: Yes), information is recorded into the L0 layer by the optical pickup 301 (step S103)

Then, under the control of the controlling device, it is judged whether or not an opposed recording area in the L1 layer is in the unrecorded state, on the basis of the obtained management information, such as the RMD (step S104). If the opposed recording area in the L1 layer is in the unrecorded state (the step S104: Yes), (i) the same attribute as that of the lead-out area is given to the opposed recording area, and in addition to or instead of this, (ii) information, such as dummy data, is recorded into the recording area, by the optical pickup 301 under the control of the controlling device (step S105).

Then, under the control of the controlling device, it is judged whether or not a finalize process is performed (step S106). If the finalize process is performed (the step S106: Yes), the recording area in the recorded state and the recording area in the unrecorded state are detected in the L1 layer by the optical pickup 301 under the control of the controlling device (step S107).

Then, (i) the same attribute as that of the lead-out area is given to the recording area in the unrecorded state in the L1 layer, other than the detected recording area in the recorded state in the L1 layer, and in addition to or instead of this, (ii) information, such as dummy data, is recorded into the recording area, by the optical pickup 301 under the control of the controlling device (step S108).

Then, under the control of the controlling device, an actual ejection operation is performed on the optical disc (step S109).

On the other hand, as a result of the judgment in the step S102, if the information is not recorded into the L0 layer (the step 102: No), the information is recorded into the L1 layer by the optical pickup 301 under the control of the controlling device (step S110).

Moreover, on the other hand, as a result of the judgment in the step S104, if the opposed recording area in the L1 layer is not in the unrecorded state; namely, it is in the recorded state (the step S104: No), it is judged whether or not the finalize process is performed, under the control of the controlling device, as described above (the step S106).

### (2-3) Details of Recording Operation in First Embodiment

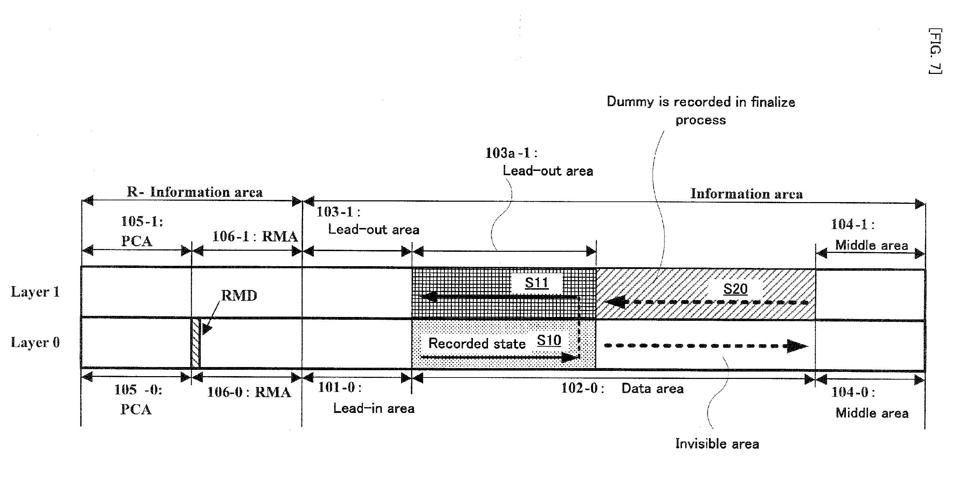

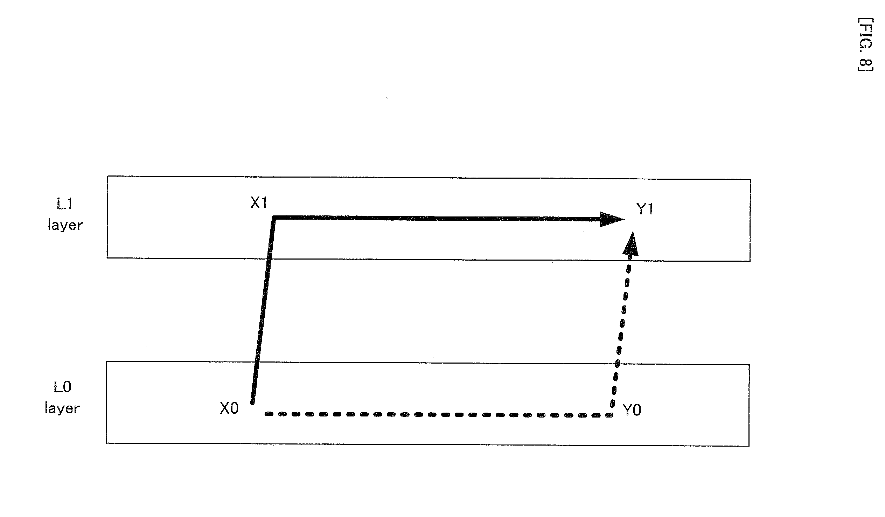

Next, with reference to FIG. 7 and FIG. 8, an explanation will be given on a detailed recording operation in the first embodiment of the present invention. FIG. 7 is a schematic diagram showing the recording areas in which the recording operation is performed, in the first embodiment of the present invention. FIG. 8 is a conceptual schematic diagram schematically showing a route when the information recording / reproducing apparatus, such as a general DVD-ROM drive, accesses a desired address on the two-layer type optical disc.

As shown in FIG. 7, in the detailed recording operation in the first embodiment of the present invention, if e.g. the information recording / reproducing apparatus records information into a partial recording area of the data area 102-0 in the L0 layer (refer to a step S10 in FIG. 7), (i) the same attribute as that of the lead-out area is given to a recording area in the L1 layer facing this recording area in the L0 layer, and in addition to or instead of this, (ii) information, such as dummy data, is recorded into the recording area (refer to a step S11 in FIG. 7). With regard to the recording area in the L1 layer in which the dummy data is recorded, it is generally known that it is necessary to record the dummy data, such as "Null", in addition to the effective record information, such as content information, in an unrecorded area in the L1 layer facing the recording area in the L0 layer of the optical disc. This is because tracking servo is normally controlled in the layer focus jump (or layer change) of the optical pickup at the time of the reproduction operation of a general DVD-ROM, by which user data is normally reproduced. Therefore, a time length required for the actual finalize process is increased, by a recording time length for the dummy data, in addition to a recording time length for the effective record information, such as content information.

More specifically, in the case that the inner circumferential side of the L1 layer is unrecorded without the dummy data recorded, if the optical pickup enters therein, tracking servo goes off and the optical pickup tends to be out of control because there is no RF reproduction signal. Specifically, the optical pickup of a DVD-ROM drive firstly focuses on the L1 layer, i.e. performs the layer focus jump (or layer change), in order to access a certain desired sector number in the L1 layer (i.e. a "Y1" point in FIG. 8) from a predetermined sector number in the L0 layer (i.e. an "X0" point in FIG. 8) on the two-layer type optical disc. That is, the optical pickup performs the layer focus jump from the "X0" point to an "X1" point in FIG. 8. Alternatively, the optical pickup performs the layer focus jump from a "Y0" point to the "Y1" point in FIG. 8. In this case, if the sector number in the L1 layer which is a destination of the layer focus jump (i.e. the "X1" point or the "Y2" point in FIG. 8) is unrecorded, the optical pickup cannot control tracking servo by e.g. a phase contrast method, and the optical pickup goes out of control. More specifically, the optical pickup of a DVD-ROM read-only drive, which employs the phase contrast method, can hardly control or cannot control the tracking servo with respect to an unrecorded area on a DVD-R which employs a push-pull method. This is additionally stated as one example of the case that the reproduction of a DVD-R cannot be performed on a DVD-ROM drive.

Back in FIG. 7.

As a result, according to the embodiment, in the recording area in the L1 layer (i) to which the same attribute as that of the lead-out area is given, and (ii) in which information, such as dummy data, is recorded, it is possible to almost or completely eliminate the need to record the dummy data in the finalize process. Therefore, in the finalize process, it is possible to reduce the size of the recording area in which the dummy data needs to be recorded, or it is possible to almost or completely eliminate the recording area in which the dummy data needs to be recorded. Specifically, it is only necessary to record the dummy data into the recording area that includes an arrow of step S20 in FIG. 7. More specifically, an invisible area (i.e., a not recognized area) in the L0 layer may be kept in the unrecorded state (or mirror state), as an area which is not recognized by the information recording / reproducing apparatus. Alternatively, the dummy data may be recorded in the finalize process. Alternatively, pre-format may be performed with the same attribute as that of the middle area.

As a result, the time length required for the finalize process becomes substantially equal to the recording time length to record the effective information, such as content information. Thus, it is possible to considerably reduce the time length required for the finalize process, so that a user can feel more comfortable.

In addition, according to the embodiment, for example, in the recording area in the L1 layer in which the dummy data is recorded, it is possible to almost or completely eliminate the need to record the dummy data in the finalize process. This can simplify the control process in the finalize process, to thereby inhibit a high load on the control process.

### (3) Study of Operation and Effect of First Embodiment of Information Recording Apparatus

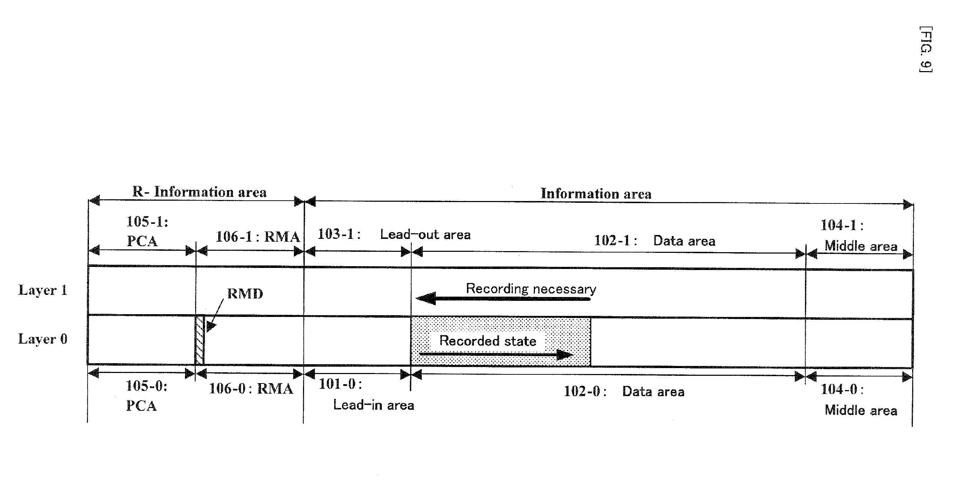

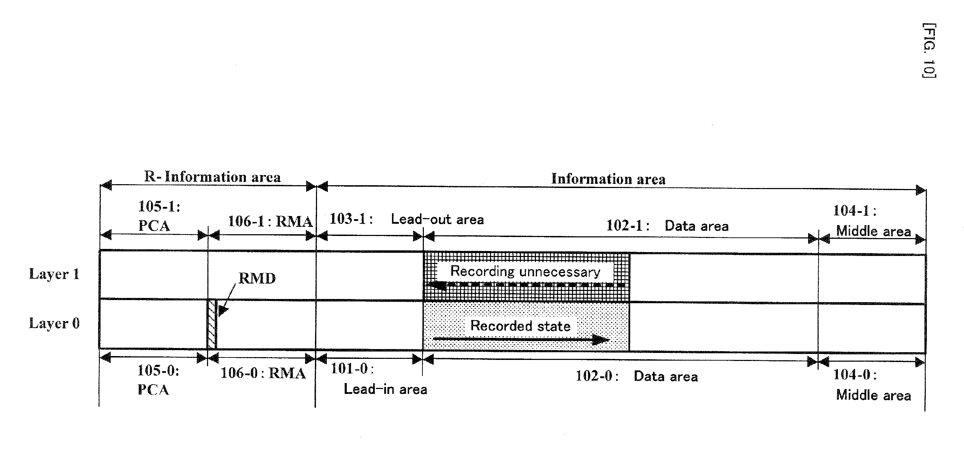

Next, with reference to FIG. 9 and FIG. 10, consideration will be given to the operation and effect of the embodiment of the information recording apparatus of the present invention. FIG. 9 is a schematic diagram schematically showing the recording areas in which the recording operation is performed, in a comparison example. FIG. 10 is a schematic diagram showing the recording areas in which the recording operation is performed, with the effect related to the first embodiment of the present invention focused.

As described above, according to the information recording / reproducing apparatus in the embodiment, if information is recorded into the recording area in the L0 layer, for example, information such as dummy data is recorded into the recording area in the L1 layer which is located in a position facing the recording area in the L0 layer.

If, in the comparison example, the information such as dummy data is not recorded into the recording in the L1 layer located in the opposed position, the recording area in the L1 layer, which faces the recording area in the recorded state in the L0 layer, is inevitably made in the recorded state in order to realize compatibility with a read-only apparatus, in the finalize process, as shown in FIG. 9. Thus, it takes a considerable time for the finalize process. Alternatively, there arises a need to judge whether or not the recording area in the L1 layer, facing the recording area in the recorded state in the L0 layer, is already recorded, on the basis of the management information, such as SBM. Therefore, there is such a technical problem that it causes a complicated control process in the finalize process, to thereby increase a load in the control process.

In contrast, according to the embodiment, as shown in FIG. 10, in the recording area in the L1 layer (i) to which the same attribute as that of the lead-out area is given, and (ii) in which information, such as dummy data, is recorded, it is possible to almost or completely eliminate the need to record the dummy data in the finalize process. Therefore, in the finalize process, it is possible to reduce the size of the recording area in which the dummy data needs to be recorded, or it is possible to almost or completely eliminate the recording area in which the dummy data needs to be recorded.

As a result, the time length required for the finalize process becomes substantially equal to the recording time length to record the effective information, such as content information. Thus, it is possible to considerably reduce the time length required for the finalize process, so that a user can feel more comfortable.

In addition, according to the embodiment, for example, in the recording area in the L1 layer in which the dummy data is recorded, it is possible to almost or completely eliminate the need to record the dummy data in the finalize process. This can simplify the control process in the finalize process, to thereby inhibit a high load on the control process.

### (4) Second Embodiment of Information Recording Apparatus

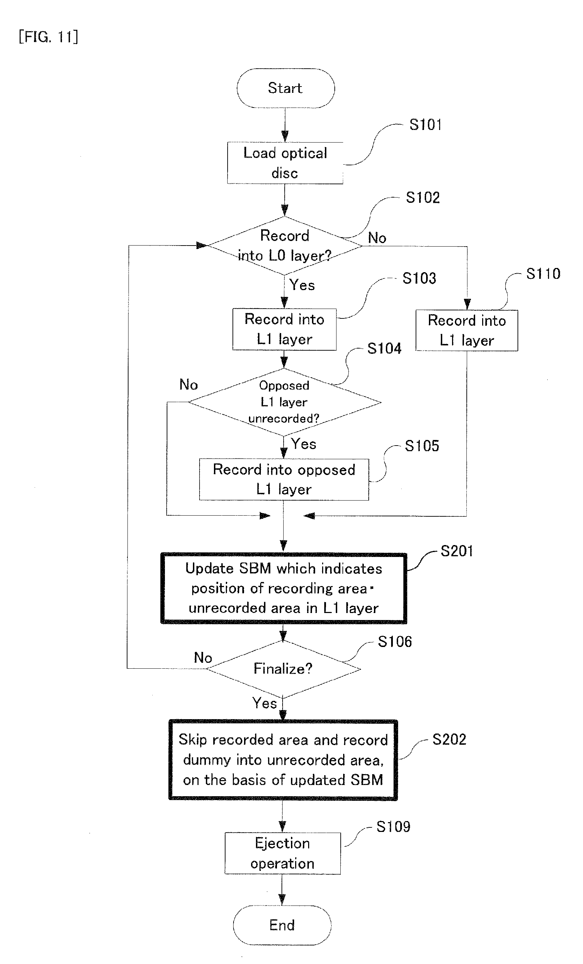

Next, with reference to FIG. 11, a second embodiment of the information recording apparatus of the present invention will be discussed. Incidentally, the basic structure and the operation principle in the second embodiment are substantially the same as those in the first embodiment described above, so that the explanation thereof will be omitted, as occasion demands.

### (4-1) Details of Recording Operation in Second Embodiment

Next, with reference to FIG. 11, the overall operation principle of an information recording / reproducing apparatus in a second embodiment of the information recording apparatus of the present invention will be discussed. FIG. 11 is a flowchart showing an overall recording operation and a finalize process, performed by the information recording / reproducing apparatus in the second embodiment of the information recording apparatus of the present invention. Incidentally, substantially the same processes as those in the first embodiment in FIG. 6 described above carry the same step numbers, and the explanation thereof will be omitted, as occasion demands.

As shown in FIG. 11, after the information is recorded into the L1 layer by the optical pickup 301 under the control of the controlling device in the step S105 and the step S106, the management information, such as space bit map, which indicates a position of the recording area or the unrecorded area in the L1 layer, is updated on a memory device, such as a memory (step S201).

As a result of the judgment in the step 5106, if the finalize process is performed (the step S106: Yes), the dummy data is recorded into the recording area in the unrecorded state, other than the recording area in the recorded state, in the L1 layer, by the optical pickup 301 on the basis of the updated management information, such as space bit map, under the control of the controlling device (step S202).

As a result, according to the second embodiment, since the management information, such as space bit map, is updated simultaneously with or before or after the recording operation in the L1 layer, it is almost or completely unnecessary to detect the recording area in the recorded state and the recording area in the unrecorded state in the L1 layer, by using the optical pickup 301 in the finalize process. Therefore, it is possible to simplify the control process in the finalize process, to thereby inhibit a high load on the control process.

The aforementioned embodiments explain the opposite method as one specific example of the recording method; however, the present invention can be also applied to another recording method, such as a parallel method.

Moreover, in the aforementioned embodiments, the write-once or rewritable type optical disc, such as a two-layer type DVD-R or DVD+R, and a DVD-RW or DVD+RW, is discussed as one specific example of the information recording medium. The present invention, however, can be applied to a multiple layer type optical disc, such as a three-layer type. Moreover, it can be applied to other various information recording media supporting high-density recording or high transmission rates, such as a disc which uses blue laser for the recording / reproduction.

Furthermore, in the embodiments, the information recording / reproducing apparatus for additional recording or writing once, such as a DVD-R recorder and a DVD+R recorder, is explained as one example of the information recording apparatus. The present invention, however, can be applied to an information recording / reproducing apparatus for rewriting, such as a multiple layer type optical disc, such as a DVD-R recorder and a DVD+R recorder. Moreover, it can be applied to an information recording / reproducing apparatus for the other various information recording media supporting high-density recording or high transmission rates, such as a disc which uses blue laser for the recording / reproduction.

The present invention is not limited to the aforementioned embodiments, and various changes may be made, if desired, without departing from the essence or spirit of the invention which can be read from the claims and the entire specification. An information recording apparatus and method, a computer program for recording control, and an information recording medium all of which involve such changes, are also intended to be within the technical scope of the present invention.

### Industrial Applicability

The information recording apparatus and method, the computer program for recording control, and the information recording medium according to the present invention can be applied to a multilayer type optical disc, such as a two-layer type DVD and CD (Compact Disc), and further to a recording apparatus, such as a DVD recorder. Moreover, they can be applied to an information recording apparatus or the like which is mounted on various computer equipment for consumer use or for commercial use, or which can be connected to various computer equipment.

## Claims

1. An information recording apparatus for recording information into at least a second recording layer by using laser light which passes through a first recording layer on an information recording medium at least comprising: said first recording layer in which a first track to record therein first information is formed; and said second recording layer in which a second track to record therein second information is formed, the second track corresponding to the first track, said information recording apparatus comprising:
a recording device for recording the first information into said first recording layer and recording the second information into said second recording layer; and
a controlling device for controlling said recording device to record dummy data as the second information into another recording area in said second recording layer, which is located in a position facing one recording area in said first recording layer if the first information is recorded into the one recording area.

2. The information recording apparatus according to claim 1, wherein said controlling device controls said recording device to record the dummy data such that a range of a radial position of the another recording area is included in a range of a radial position of the one recording area.

3. The information recording apparatus according to claim 1, wherein said controlling device controls said recording device to make the another recording area have a same attribute as that of a lead-out area, when the dummy data is recorded.

4. The information recording apparatus according to claim 1, wherein said controlling device controls said recording device such that (i) a same attribute as that of a data area is given to the another recording area, and (ii) zero or a predetermined value is recorded into the another recording area as the dummy data.

5. The information recording apparatus according to claim 1, further comprising an obtaining device which can obtain at least position information about a position in which the second information is recorded in said second recording layer,
said controlling device controlling said recording device to perform a finalize process on the basis of the obtained position information.

6. The information recording apparatus according to claim 1, further comprising a detecting device which can detect at least address information which indicates a position in which the second information is recorded in said second recording layer,
said controlling device controlling said recording device to perform a finalize process on the basis of the detected address information.

7. The information recording apparatus according to claim 1, wherein
said information recording medium has a management information recording area in which at least position information can be recorded, the position information being about a position in which the second information is recorded in said second recording layer,
said information recording apparatus further comprises:
a reading device for reading the position information recorded in the management information recording area;
a memory device for storing the read position information; and
an updating device for updating the stored position information if at least the second information is recorded, and
said controlling device controls said recording device (i) to perform a finalize process on the basis of the updated position information and (ii) to record the updated position information into the management information recording area.

8. The information recording apparatus according to claim 1, wherein said controlling device controls said recording device to overwrite the another recording area in said second recording layer with the second information.

9. An information recording method on an information recording apparatus for recording information into at least a second recording layer by using laser light which passes through a first recording layer on an information recording medium at least comprising: said first recording layer in which a first track to record therein first information is formed; and said second recording layer in which a second track to record therein second information is formed, the second track corresponding to the first track, said information recording method comprising:
a recording process of recording the first information into said first recording layer and recording the second information into said second recording layer; and
a controlling process of controlling said recording process to record dummy data as the second information into another recording area in said second recording layer, which is located in a position facing one recording area in said first recording layer if the first information is recorded into the one recording area.

10. A computer program of instructions for recording control and for tangibly embodying a program of instructions executable by a computer provided in the information recording apparatus according to claim 1, to make the computer function as at least one portion of said recording device and said controlling device.

11. An information recording medium at least comprising:
a first recording layer, in which a first track to record therein first information is formed; and
a second recording layer, in which a second track to record therein second information is formed, the second track corresponding to the first track,
the second track being formed on said second recording layer such that dummy data can be recorded as the second information in another recording area in said second recording layer, which is located in a position facing one recording area in said first recording layer in which the first information is recorded.

12. The information recording medium according to claim 11, wherein at least one of said first recording layer and said second recording layer has a management information recording area in which at least position information can be recorded, the position information being about a position in which the second information is recorded in said second recording layer.

13. The information recording medium according to claim 11, wherein
the first information or the second information is recorded by a predetermined block unit in said first recording layer and said second recording layer, and
the predetermined block holds information which indicates an attribute of a data area, an attribute of a lead-out area, or an attribute of a middle area.
